# EUROPÄISCHE PATENTSCHRIFT

(11) **EP 0 725 504 B1**
(45) Veröffentlichungstag und Bekanntmachung des Hinweises auf die Patenterteilung: **24.08.2005**
(21) Anmeldenummer: 95119663.3
(22) Anmeldetag: 13.12.1995
(51) Int. Cl.: H04H 1/00

(54) **Radiodatenempfänger mit Einrichtung zur Ausgabe von empfangenen digital codierten Verkehrsmeldungen**
Radio data system receiver with a means for displaying digitally coded traffic information
Récepteur RDS comportant un dispositif d'affichage d'informations routières

(30) Priorität: 03.02.1995 DE 19503414
(43) Veröffentlichungstag der Anmeldung: 07.08.1996
(73) Patentinhaber: ROBERT BOSCH GMBH, 70442 Stuttgart (DE)
(72) Erfinder: Goss, Stefan, Dipl.-Ing., D-31137 Hildesheim (DE)

(56) Entgegenhaltungen:
- EP-A- 0 259 970
- EP-A- 0 283 708
- EP-A- 0 290 679
- EP-A- 0 586 897
- WO-A-94/22243

## Beschreibung

Die Erfindung geht aus von Verfahren zur Ausgabe von empfangenen digital codierten Verkehrsmeldungen, die Ortsangaben und Ereignisangaben enthalten.

Mit dem Radio-Daten-System (RDS) wird eine zusätzliche und unhörbare Übermittlung von digitalen Daten parallel zu Rundfunkprogrammen in einem Datenkanal ermöglicht. Spezifikationen des Radio-Daten-Systems für UKW-Hörfunk sind unter anderem in der Druckschrift Tech. 3244 - E, März 1984 der europäischen Runfunk-Union (EBU) festgelegt. Rundfunkempfänger mit geeigneten RDS-Decodern können übermittelte Daten zusätzlich zum Rundfunkempfang mit dem selben Empfangsteil aufnehmen und decodieren. Die Datenübertragung erfolgt in 32 Gruppen zu jeweils 108 Bit, wobei jeder Gruppe ein bestimmter Dienst zugewiesen wird. Die Gruppe 8a ist zur Übertragung von digital codierten Verkehrsmeldungen vorgesehen.

Der Aufbau und die Codierung dieser Verkehrsmeldungen sind in dem Normvorschlag ALERT C, November 1990, herausgegeben vom RDS ATT ALERT Consortium, im einzelnen festgelegt. Die wesentlichen Elemente einer Verkehrsmeldung sind dabei der Ort des Geschehens (Location) und das Ereignis (Event). Diese Angaben sind katalogisiert, das heißt, daß jedem verkehrsrelevanten Ort und jedem verkehrsrelevanten Ereignis ein eindeutiger Code zugewiesen ist. Die Verkettung der Orte in der Ortstabelle entlang existierender Straßen gibt den Verlauf wieder. Außer den üblichen Einrichtungen eines Empfangsgerätes mit einem RDS-Decoder sind zur Nutzung des Verkehrsmeldungskanals TMC (Traffic Message Channel) Einrichtungen zur Decodierung, zur Speicherung, zur Weiterverarbeitung und zur Ausgabe der Verkehrsmeldungen erforderlich.

Bei den bisher gebräuchlichen Verkehrsdurchsagen ist eine Sortierung der Verkehrsmeldungen nach deren Dringlichkeit und nach der Hierarchie der jeweils betroffenen Straßen üblich. So werden beispielsweise, falls keine besonders dringliche Verkehrsmeldung vorliegt, zunächst die Verkehrsmeldungen, die sich auf Autobahnen beziehen, danach die Verkehrsmeldungen für Bundesstraßen, dann für Landstraßen und schließlich innerörtliche Verkehrsmeldungen durchgegeben. Außerdem werden bei den Verkehrsdurchsagen mehrere Verkehrsmeldungen zu einer Sammelmeldung zusammengefaßt, beispielsweise nach dem Muster "zähfließender Verkehr auf folgenden Autobahnabschnitten ...".

Die digital codierten Verkehrsmeldungen nach dem ALERT-Norm-Vorschlag sind weder sortiert noch ist die Übertragung von Sammelmeldungen möglich.

Beide Formen tragen jedoch wesentlich zum Verständnis durch den Benutzer bzw. den Autofahrer bei, der die ihn betreffenden Verkehrsmeldungen verstehen muss, ohne sich vom Verkehrsgeschehen ablenken zu lassen.

In EP-A-0 586 897 wird ein Verfahren vorgeschlagen, bei dem zur Auswahl von digital codierten Verkehrsnachrichten ein Richtungsfächer durch Betätigung einer Kreuzwippe eines Rundfunkempfängers eingegeben wird, die Position des Rundfunkempfängers bestimmt wird und die den ausgewählten Richtungsfächer betreffenden Verkehrsnachrichten über eine Ausgabeeinrichtung ausgegeben werden.

Die EP-A-0 290 679 schlägt eine zonenbezogene Auswahl von TMC-Verkehrsnachrichten vor.

EP-A-0 259 970 offenbart einen Rundfunkempfänger, der in einem empfangenen Rundfunksignal enthaltene Audiosignale über einen Lautsprecher wiedergibt und der weiterhin in dem empfangenen Rundfunksignal enthaltene nicht hörbare Datensignale decodiert und auf einem berührungsempfindlichen Bildschirm des Geräts anzeigt.

EP-A 0 283 708 offenbart einen Rundfunkempfänger mit einem ersten Verkehrsfunk-Decoder und weiterhin einen RDS-Verkehrsfunk-Decoder, bei dem mittels eines Wahlschalters die Signale entweder des ersten oder des RDS-Verkehrsfunk-Decoders an eine NF-Endstufe zur Wiedergabe durchgeschaltet werden. Die Durchschaltung kann automatisch in Abhängigkeit der jeweils empfangenen Verkehrsnachricht erfolgen und es ist auch möglich, bei gleichzeitigem Vorliegen beider Signale vorrangig den ersten Verkehrsfunk-Decoder an die NF-Endstufe zu schalten und den RDS-Verkehrshinweis zwischenzuspeichern. Nach dem Ende des Verkehrshinweises wird anschließend der gespeicherte RDS-Verkehrshinweis zu Gehör gebracht.

WO-A-94 22243 offenbart die Möglichkeit, RDS-Informationen, wie Nachrichten, Wetter oder Ähnliches zu empfangen und zu speichern. Der Nutzer kann im Anschluss bestimmte Informationen, wie z. B. Wetter, zur Wiedergabe abrufen.

Beide Formen tragen jedoch wesentlich zum Verständnis durch den Benutzer bzw. den Autofahrer bei, der die ihn betreffenden Verkehrsmeldungen verstehen muß, ohne sich vom Verkehrsgeschehen ablenken zu lassen.

Aufgabe der vorliegenden Erfindung ist es, die Informationsaufnahme durch den Benutzer bei der Ausgabe von empfangenen digital codierten Verkehrsmeldungen zu verbessern bzw. zu erleichtern.

Bei einem erfindungsgemäßen Verfahren wird diese Aufgabe dadurch gelöst, daß empfangene Verkehrsmeldungen zwischengespeichert werden und daß die Ausgabe der zwischengespeicherten Verkehrsmeldungen in einer Reihenfolge nach vorgegebenen Kriterien unter Verwendung von mit den Verkehrsmeldungen zwischengespeicherten zusätzlichen Daten erfolgt.

Durch dieses erfindungsgemäße Verfahren können die zwischengespeicherten Verkehrsmeldungen in einer für den Benutzer sinnvollen Reihenfolge wiedergegeben werden. Das Kriterium für die Reihenfolge kann dabei zum Beispiel die Uhrzeit des Erstempfangs, die Hierarchie derjenigen Straßen, auf die sich die Verkehrsmeldungen beziehen, oder ein Grad der Dringlichkeit einer Verkehrsmeldung sein, der zusammen mit der Verkehrsmeldung empfangen wurde bzw. im Ereigniskatalog statisch vorliegt.

Eine Weiterbildung des erfindungsgemäßen Verfahrens besteht darin, daß jeweils beim Empfang einer Verkehrsmeldung eine neue Reihenfolge festgelegt und in Form von Zeigern mit den Verkehrsmeldungen abgelegt wird. Diese Weiterbildung ermöglicht bei einem Signal zur Anforderung der Ausgabe ein sofortiges Ausgeben der Verkehrsmeldung in der bereits festgelegten Reihenfolge.

Eine andere Weiterbildung dieses erfindungsgemäßen Verfahrens sieht vor, daß von mehreren in der Einrichtung an sich vorgesehenen Kriterien ein Kriterium oder eine Verknüpfung mehrerer Kriterien auswählbar und speicherbar ist. Damit kann bei der erstmaligen Inbetriebnahme eines Empfängers mit der erfindungsgemäßen Einrichtung eine vom jeweiligen Benutzer gewünschte Art der Sortierung programmiert werden. Dazu kann eine Benutzerführung mit Hilfe eines Eingabe-Menüs vorgesehen sein.

Bei einem weiteren erfindungsgemäßen Verfahren wird die erfindungsgemäße Aufgabe dadurch gelöst, daß die empfangenen Verkehrsmeldungen zwischengespeichert werden und daß bei Verkehrsmeldungen mit gleichen oder ähnlichen Ereignisangaben das Ereignis zusammen mit einer Aufzählung der Ortsangaben als Sammelmeldung ausgegeben wird.

Mit diesem erfindungsgemäßen Verfahren werden für den Benutzer ermüdende Folgen einzelner ähnlicher Verkehrsmeldungen vermieden. Wenn dabei zuvor die Bezeichnung des Ereignisses wiedergegeben wird, beispielsweise "zähflüssiger Verkehr", konzentriert sich der Benutzer darauf, ob ein von ihm befahrenes Straßenstück beispielsweise nach den Worten "auf folgenden Strecken" folgt.

Ähnliche Verkehrsmeldungen können gemäß dem ALERT-Norm-Vorschlag einen gemeinsamen Bestandteil aufweisen, wie beispielsweise "Stau", und verschiedene Bestandteile wie beispielsweise "2km", "4km". Je nach Ausführung im einzelnen können auch nach ihrem Sinngehalt ähnliche Verkehrsmeldungen, wie beispielsweise "Stau" und "stockender Verkehr" zu Sammelmeldungen zusammengefaßt werden.

Gemäß einer Weiterbildung dieses Verfahrens ist vorgesehen, daß beim Erstempfang einer Verkehrsmeldung geprüft wird, ob bereits mindestens eine Verkehrsmeldung mit einer gleichen Ereignisangabe zwischengespeichert ist, und daß zutreffendenfalls die betroffenen Verkehrsmeldungen mit einem Kennzeichen versehen werden, das die Zugehörigkeit zu einer dieses Ereignis betreffenden Sammelmeldung bedeutet. Dadurch wird die Ausgabe von einer oder mehreren Sammelmeldungen in vorteilhafter Weise vorbereitet. Dabei ist vorzugsweise vorgesehen, daß das Kennzeichen in einer Verkehrsmeldungsverwaltungsdatei abgelegt wird.

Eine andere Weiterbildung dieses Verfahrens besteht darin, daß nur diejenigen Verkehrsmeldungen, die einem Selektionskriterium genügen, in einer Sammelmeldung ausgegeben werden.

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Blockschaltbild eines zum Empfang von digital codierten Verkehrsmeldungen ausgelegten Empfangsgerätes,
- Fig. 2: eine schematische Darstellung eines Speichers für die Verkehrsmeldungen und die Verwaltungsdatensätze,
- Fig. 3: ein Flußdiagramm zur Erläuterung des Empfangs und der Einkettung einer neuen Verkehrsmeldung als Beispiel für eine Sortierung nach der Aktualität der Verkehrsmeldungen,
- Fig. 4: ein Flußdiagramm zur Erläuterung der Sortierung bei Änderung des Sortierkriteriums,
- Fig. 5: eine weitere Darstellung zur Erläuterung der Sortierung und
- Fig. 6: ein Flußdiagramm zur Erläuterung der Ausgabe von Sammelmeldungen.

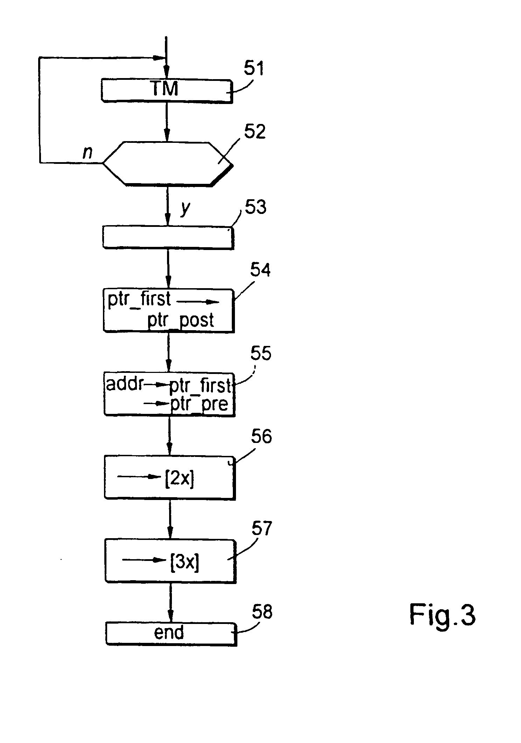

Das Ausführungsbeispiel ist zwar als Blockschaltbild dargestellt. Dieses bedeutet jedoch nicht, daß es auf eine Realisierung mit Hilfe von einzelnen den Blöcken entsprechenden Schaltungen beschränkt ist. Das Empfangsgerät ist vielmehr in besonders vorteilhafter Weise mit Hilfe von hochintegrierten Schaltungen realisierbar. Dabei können digitale Signalprozessoren eingesetzt werden, welche bei geeigneter Programmierung die in den Blockschaltbildern dargestellten Verarbeitungsschritte durchführen. Um Verwechslungen mit einer Zählvariablen n zu vermeiden, wurden die Ausgänge von Programmverzweigungen, nämlich n = nein und y = ja in den Figuren 3, 4 und 6 in Kursivschrift dargestellt.

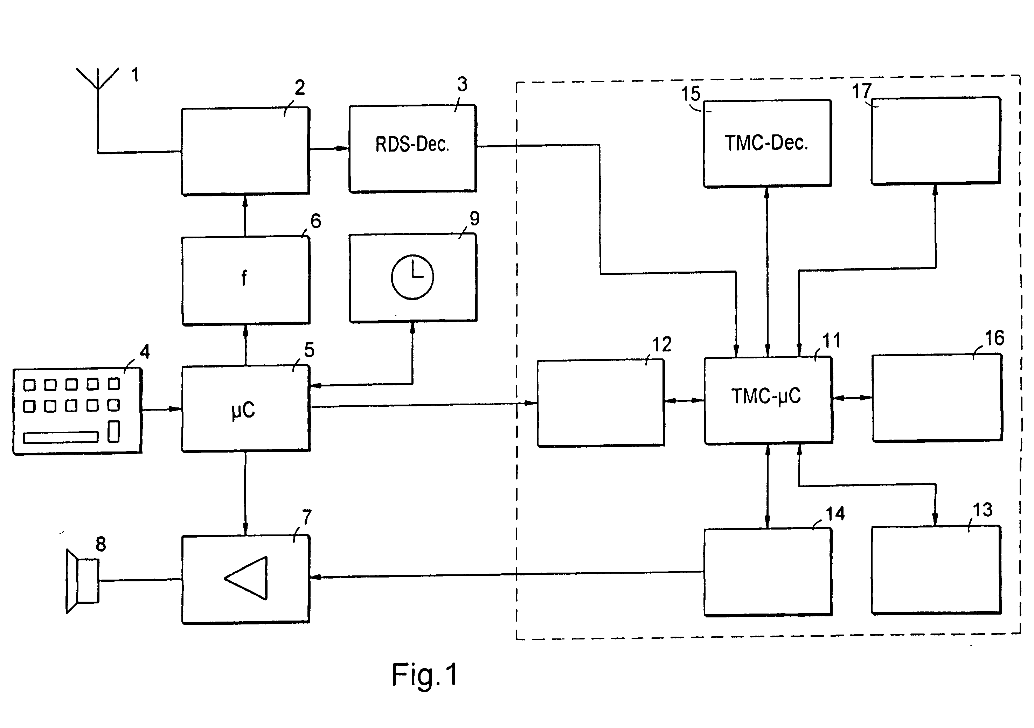

Fig. 1 zeigt einige zur Erläuterung der Erfindung erforderliche Baugruppen eines Rundfunkempfängers und im gestrichelt umrahmten Teil zur Durchführung des erfindungsgemäßen Verfahrens dienende Baugruppen. Die zu empfangenden Signale werden über eine Antenne 1 einem Empfangsteil 2 zugeführt, an dessen Ausgang ein RDS-Decoder 3 angeschlossen ist. Zur Steuerung des Rundfunkempfängers über eine Bedieneinheit 4 dient ein Mikrocomputer 5. Dieser ist über einen Frequenzeinsteller 6 mit einem Steuereingang des Empfangsteils 2 und mit einem Steuereingang eines Audio-Verstärkers 7 verbunden, um den gewünschten Sender und die Wiedergabe-Parameter, wie Lautstärke, Höhen- und Tiefenanhebung usw. einzustellen. An einen Ausgang des Audio-Verstärkers 7 ist ein Lautsprecher 8 angeschlossen. Der Mikrocomputer 5 ist ferner mit einer Uhr 9 verbunden, aus der Daten abgerufen werden können, welche das Datum und die Uhrzeit darstellen.

Im Mittelpunkt der zur Verarbeitung der Verkehrsmeldungen (TMC) dienenden Einrichtungen steht ein weiterer Mikrocomputer 11. Diesem werden die Ausgangssignale des RDS-Decoders 3 zugeführt, aus denen die Verkehrsmeldungen selektiert werden. Der TMC-Mikrocomputer 11 ist über eine Einrichtung 12 zur Handhabung der Bedienung mit dem Mikrocomputer 5 verbunden. Hierüber werden beispielsweise Kommandos von der Bedieneinheit 4 abgewickelt, um Meldungen auszugeben oder Selektionskriterien zu bearbeiten, die in einem dafür vorgesehenen nichtflüchtigen Schreib/Lese-Speicher 13 abgelegt werden.

Bei dem in Fig. 1 dargestellten Ausführungsbeispiel ist eine Sprachausgabe vorgesehen. Dazu werden in einer Sprachsynthese-Einrichtung 14 die bei 15 decodierten Verkehrsmeldungen in Sprachsignale umgesetzt und dem Audio-Verstärker 7 zugeleitet. Verkehrsmeldungen und Verwaltungsdatensätze werden im Speicher 13 abgelegt. Nur-Lese-Speicher 16 und 17 enthalten eine Ortsliste und eine Ereignisliste.

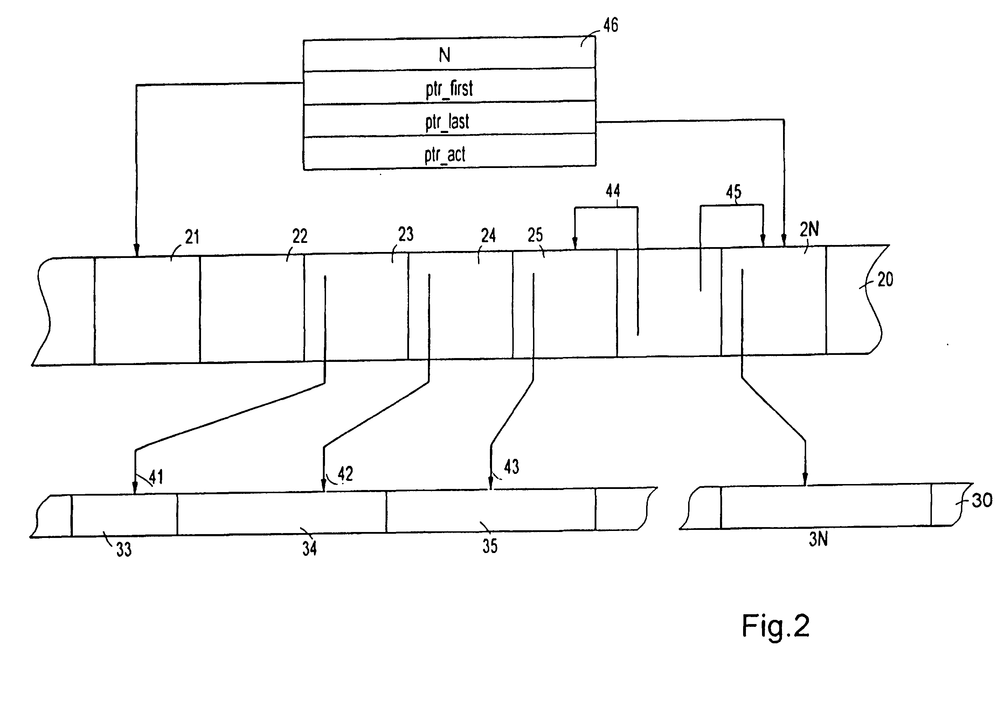

Fig. 2 zeigt eine schematische Darstellung des Aufbaus des für die Verkehrsmeldungen vorgesehenen Teils des Speichers 13 (Fig. 1), wobei die Einteilung der einzelnen Speicher- bzw. Adressenbereiche je nach Länge der einzelnen Datensätze bzw. Verkehrsmeldungen flexibel ist. In einem ersten Teil 20 des Meldungsspeichers sind Verwaltungsdatensätze 21 bis 2N abgelegt, welche jeweils folgende Daten enthalten:

| lfd. Nr. | Name | Erläuterung |
|---|---|---|
| 1. | ptr_mes | Zeiger auf den Speicher, der die Verkehrsmeldung enthält (41, 42, 43, ...) |
| 2. | meld_nr | lfd. Nummer der Verkehrsmeldung gemäß der Reihenfolge (n) |
| 3. | meld_prio | Priorität (normal, urgent, extremly urgent) |
| 4. | ptr_pre | Zeiger auf Verkehrsmeldung zuvor (44) |
| 5. | ptr_post | Zeiger auf nächste Verkehrsmeldung (45) |
| 6. | Erstzeitstempel | Monat, Woche, Tag, Stunde, Minute, Sekunde |
| 7. | Aktualisierungszeitstempel | Monat, Woche, Tag, Stunde, Minute, Sekunde |
| 8. | Gültigkeitsdauer | Monat, Woche, Tag, Stunde, Minute, (aus übertragener Dauer berechnet) |
| 9. | verifiziert | (0=nein, 1=ja) |
| 10. | gültig | (0=nein, 1=ja) |
| 11. | neu | (0=nein, 1=ja) |
| 12. | decodierbar | (0=nein, 1=ja) |
| 13. | selektiert | (0=nein, 1=ja) |
| 14. | automatische Verkehrsmeldungsausgabe | (0=nein, 1=ja) |
| 15. | sammel-meld | (0=nein, 1=ja) |
| 16. | sammel-kat | Kategorie, nach der die Verkehrsmeldung als Sammelmeldung aufgefaßt werden kann A...Z/1/ |
| 17. | ptr_sam | Zeiger auf die folgende zur Ausgabe als Sammelmeldung vorgesehen Verkehrsmeldung |
| 18. | ptr_aus_ok | Zeiger zur Kennzeichnung, ob die Verkehrsmeldung in einer Sammelmeldung ausgegeben wurde. |

Die laufende Nummer meld_nr der Verkehrsmeldung wird gemäß der Reihenfolge der Ausgabe festgelegt. Die Verkehrsmeldung mit der Nummer 1 wird zuerst ausgegeben, hat also die höchste Priorität erhalten. Diese Priorität ist an sich unabhängig von der Priorität in Form der Kennung meld_prio, welche mit der Verkehrsmeldung empfangen wird. Letztere kann jedoch gegebenenfalls zusammen mit anderen Inhalten der Verkehrsmeldungen als Sortierkriterium verwendet werden. Der Zeiger ptr_post wird benötigt, um die Verkehrsmeldungen in der zuvor festgelegten Reihenfolge auszugeben, während der Zeiger ptr_pre dazu dient, nach der Ausgabe einer Verkehrsmeldung auf Wunsch des Benutzers diese zu wiederholen bzw. durch entsprechende Bedieneingaben mehrere zurückliegende zu wiederholen. Die Kennung sammel_kat ist ebenfalls in dem ALERT-Norm-Vorschlag vorgesehen und bezeichnet eine Kategorie der Verkehrsmeldung, beispielsweise Stau, Wettermeldung, Unfall u.a., wozu Buchstaben und Zahlen vorgesehen sind.

Mit Hilfe der in den Verwaltungsdatensätzen gespeicherten Adressen kann dann auf Verkehrsmeldungen 31 bis 3N im Teil 30 des Speichers zugegriffen werden, was durch Pfeile 41, 42, 43 schematisch dargestellt ist. Pfeile 44, 45 veranschaulichen die Zeiger eines Verwaltungsdatensatzes, die auf den vorangegangenen und den folgenden Verwaltungsdatensatz hinweisen.

Ein schneller Zugriff auf den jeweiligen Verwaltungsdatensatz und damit im Bedarfsfall auch auf die jeweilige Verkehrsmeldung wird dadurch erzielt, daß außerdem ein sogenannter Header 46 im Speicher abgelegt ist, der die Anzahl N der Verkehrsmeldungen, einen Zeiger ptr_first auf den ersten Verwaltungsdatensatz, einen Zeiger ptr_last auf den letzten Verwaltungsdatensatz und einen Zeiger ptr_act auf den jeweils in Bearbeitung befindlichen Verwaltungsdatensatz enthält.

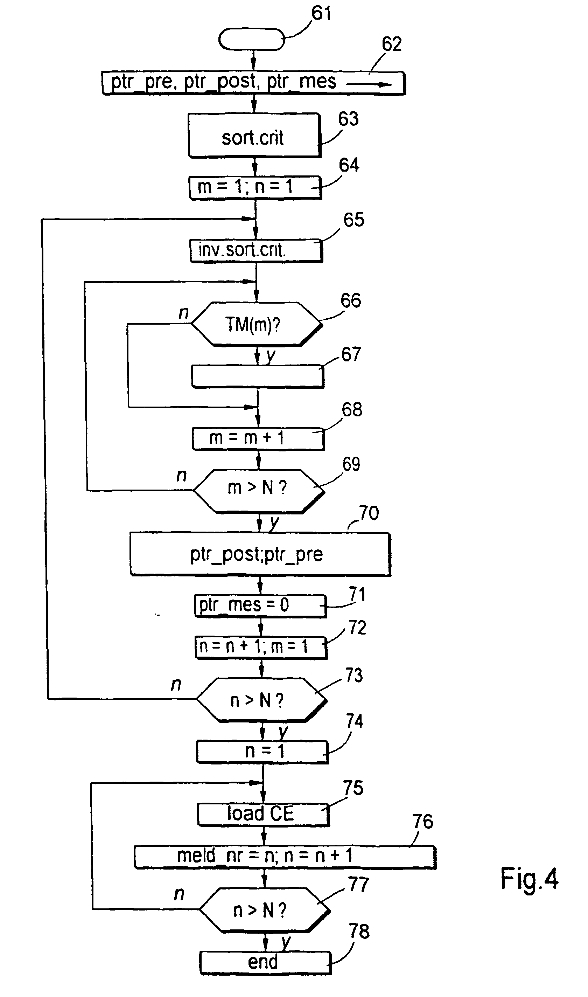

Die Flußdiagramme in den Figuren 3 und 4 stellen Teile eines Programms des Mikrocomputers 11 (Fig. 1) dar. Im Programm gemäß Fig. 3 wird bei 51 eine Verkehrsmeldung TM empfangen und bei 52 in Abhängigkeit davon, ob die Verkehrsmeldung TM neu ist, verzweigt. Nur bei neuen Verkehrsmeldungen werden die folgenden Programmschritte abgearbeitet. Zunächst wird bei 53 sowohl für einen Verwaltungsdatensatz als auch für eine Verkehrsmeldung Speicherplatz bereitgestellt. Danach wird bei 54 der im Header 46 abgelegte Zeiger ptr_first als Zeiger ptr_post (45 in Fig. 2) in den neuen Verwaltungsdatensatz kopiert. Bei 55 wird die Adresse des neuen Verwaltungsdatensatzes als ptr_first in den Header und als ptr_pre in den zuvor ersten Verwaltungsdatensatz kopiert.

Weitere Daten gemäß obiger Tabelle werden dann im Programmteil 56 in den Verwaltungsdatensatz 21 bis 2N (Fig. 2) eingeschrieben. Schließlich wird bei 57 die Verkehrsmeldung 31 bis 3N (Fig. 2) selbst im Speicher abgelegt unter der Adresse ptr_mes. Bei 58 ist das Programm beendet.

Das in Fig. 4 dargestellte Programm dient zum Sortieren der Ausgabe-Reihenfolge von bereits gespeicherten Verkehrsmeldungen bei Änderung des Sortierkriteriums im Programmteil 61. Das Sortierkriterium sort.crit kann neu eingegeben oder durch eine Eingabe ein bereits zuvor festgelegtes Kriterium aktiviert werden. Im Programmteil 62 werden für alle N gespeicherten Verkehrsmeldungen die Zeiger ptr_pre, ptr_post und ptr_mes in einen Zwischenspeicher kopiert. Danach erfolgt bei 63 die Festlegung eines Kriteriums crit, beispielsweise nach der Straßenklasse abwärts und der Straßennummer aufwärts.

Bei 64 werden Zähler m, n über alle gespeicherten Verkehrsmeldungen auf 1 gesetzt. Im Programmteil 65 wird dann ein Zwischenspeicher für die Adresse des aktuellen, d.h. jeweils mit den folgenden Programmschritten zu bearbeitenden, Verwaltungsdatensatzes angelegt und inverse Kriterien inv.crit vorgegeben, beispielsweise die Straßenklasse von 5 (innerstädtisch) und eine Straßennummer von 999. Eine Verkehrsmeldung mit diesen Parametern würde demnach an letzter Stelle ausgegeben werden. Bei 66 wird geprüft, ob die m-te Verkehrsmeldung TM(m) gemäß Kriterium sort.crit im Zwischenspeicher eine höhere Priorität erhalten soll. Ist dieses der Fall, wird bei 67 die Adresse der m-ten Verkehrsmeldung in den Zwischenspeicher eingeschrieben und das Kriterium aktualisiert. Anderenfalls unterbleibt das Einschreiben, worauf bei 68 m inkrementiert wird.

Solange m noch nicht größer als N ist, werden die Programmschritte 66 bis 68 wiederholt. Wird m größer als N, wird das Programm nach der Verzweigung 69 mit dem Programmteil 70 dadurch fortgesetzt, daß in den Verwaltungsdatensätzen die Zeiger ptr_pre(m-1), ptr_pre(m+1), ptr_post(n-1), ptr_pre(n+1), ptr_pre(n-1) und ptr_post(n+1) der (m-1)-ten, der (m+1)-ten, der (n-1)-ten und der (n+1)-ten Verkehrsmeldung nach folgendem Schema verändert werden:

Aus der ursprünglichen Reihenfolge wird als die m-te gemäß 67 zwischengespeicherte Verkehrsmeldung dadurch herausgelöst, daß
- ptr_post der (m-1)-ten auf die (m+1)-te Verkehrsmeldung verändert wird,
- ptr_pre der (m+1)-ten auf die (m-1)-te Verkehrsmeldung verändert wird.
Die Einreichung der m-ten Verkehrsmeldung mit der neuen Priorität erfolgt dann durch folgende Veränderungen:
- ptr_post der (n-1)-ten Verkehrsmeldung auf die m-te Verkehrsmeldung,
- ptr_pre der (n+1)-ten Verkehrsmeldung auf die m-te Verkehrsmeldung,
- ptr_pre der m-ten Verkehrsmeldung auf die (n-1)-te Verkehrsmeldung,
- ptr_post der m-ten Verkehrsmeldung auf die (n+1)-te Verkehrsmeldung.

Der Übersichtlichkeit halber sind die Veränderungen auf die Verkehrsmeldungen selbst bezogen. Bei der in Fig. 2 dargestellten Verwaltung der Verkehrsmeldung mit Hilfe von Verwaltungsdatensätze beziehen sich die Zeiger und deren Veränderungen auf die Verwaltungsdatensätze, also nur mittelbar auf die Verkehrsmeldungen selbst.

Bei 71 wird der Zeiger ptr_mes im Zwischenspeicher auf 0 gesetzt, damit die aktuelle Verkehrsmeldung, die durch die bisher erfolgte Sortierung bereits die neue Priorität erreicht hat, bei den folgenden Programmdurchläufen nicht nochmals auf ihren Rang geprüft wird. Bei 72 wird dann n inkrementiert und m auf 1 gesetzt. Die Verzweigung 73 erfolgt in Abhängigkeit davon, ob n größer als N ist. Solange diese Bedingung noch nicht erfüllt ist, wird das Programm beginnend bei 66 für weitere Verkehrsmeldungen wiederholt. Ist n jedoch größer als N, sind N Verwaltungsdatensätze durch entsprechendes Setzen der Zeiger ptr_pre und ptr_post sortiert.

Es ist dann lediglich noch ein Setzen der laufenden Nummer meld_nr der Verkehrsmeldungen entsprechend der neuen Reihenfolge erforderlich. Dazu wird bei 74 n auf 1 gesetzt und bei 75 der jeweils zu bearbeitende, bezüglich der Reihenfolge bereits durch die verschiedenen Zeiger festgelegte Verwaltungsdatensatz CE geladen. Bei 76 wird die in diesem Verwaltungsdatensatz enthaltene laufende Nummer meld_nr gleich n gesetzt und n inkrementiert. Dieses wird über die Verzweigung 77 solange wiederholt, bis n größer als N ist, worauf das Programm bei 78 beendet wird.

Das Kopieren der Zeiger der Verwaltungsdatensätze in einen Zwischenspeicher gemäß Programmteil 62 dient außerdem dazu, eine Ausgabe von Verkehrsmeldungen auch während des Sortiervorganges zu ermöglichen. Bei einem Ausgabewunsch des Benutzers während des Sortiervorganges werden dann die gespeicherten Verkehrsmeldungen in einer durch die zwischengespeicherten Zeiger gegebenen Reihenfolge - also nach der alten Sortierung - ausgegeben. Je nach Voraussetzungen im einzelnen (Geschwindigkeit des Mikrocomputers, zumutbare Wartezeit) kann eine Ausgabe erst nach Abschluß des Sortiervorganges erfolgen.

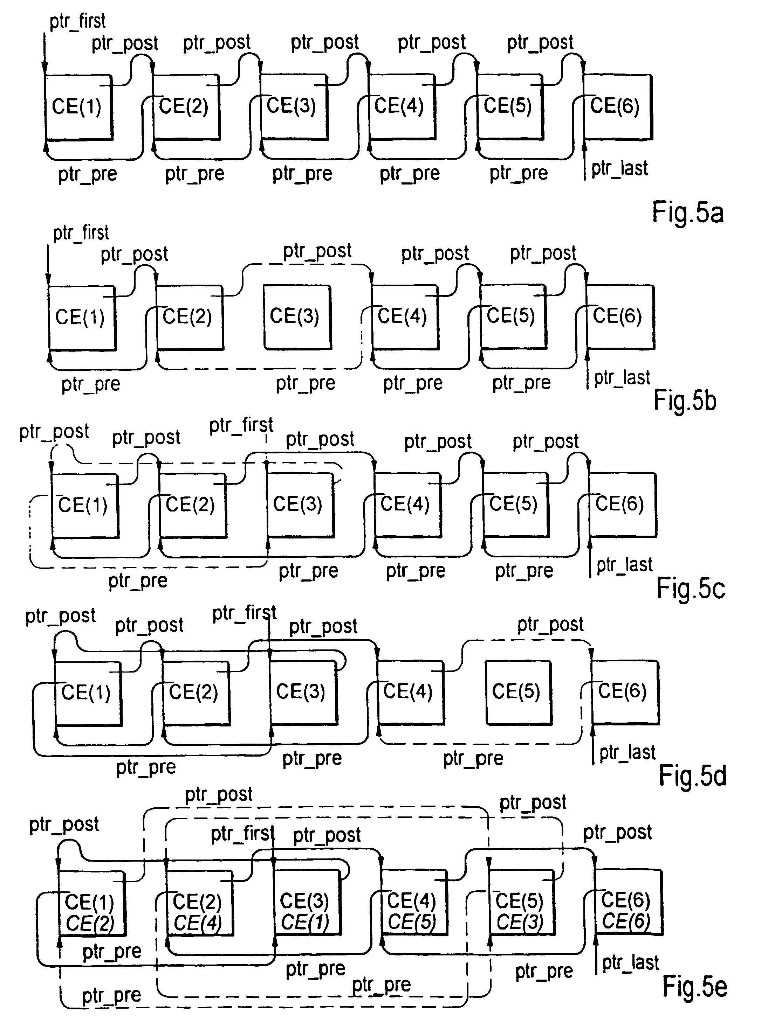

Fig. 5 stellt schematisch sechs Verwaltungsdatensätze CE(1) bis CE(6) dar, welche jeweils eine Verkehrsmeldung betreffen. In Fig. 5a sind die Verwaltungsdatensätze in einer vorgegebenen Reihenfolge geordnet. In jedem Verwaltungsdatensatz CU befindet sich ein Zeiger ptr_post, der auf den folgenden Verwaltungsdatensatz zeigt, und ein Zeiger ptr_pre, der auf den vorangegangenen Verwaltungsdatensatz hinweist. Die Zeiger ptr_first und ptr_last im Header 46 (Fig. 2) zeigen auf die Verwaltungsdatensätze CE(1) bzw. CE(6).

Wird nun mit Hilfe der Programmschritte 61 bis 69 (Fig. 4) festgestellt, daß der Verwaltungsdatensatz CE(3) die höchste Priorität, das heißt n = 1, erhalten soll, wird dazu gemäß Fig. 5b der Verwaltungsdatensatz CE(3) aus der Reihe herausgenommen. Die Zeiger ptr_post und ptr_pre der Verwaltungsdatensätze CE(2) und CE(4) werden entsprechend geändert. Die im jeweiligen Schritt geänderten Zeiger sind in Fig. 5 gestrichelt dargestellt.

Bei dem Zustand gemäß Fig. 5c ist die Einreihung des ursprünglich dritten Verwaltungsdatensatzes an die erste Stelle vollzogen. Außer den auf die benachbarten Verwaltungsdatensätze weisenden Zeigern wurde auch der Zeiger ptr_first des Headers 46 (Fig. 2) derart geändert, daß er nunmehr auf den Verwaltungsdatensatz CE(3) weist.

In Fig. 5d wurde der Verwaltungsdatensatz CE(5) aus der Reihe herausgetrennt und Verwaltungsdatensätze CE(4) und CE(6) durch Ändern der Zeiger ptr_post und ptr_pre miteinander verbunden.

Fig. 5e zeigt dann die Einreihung des ursprünglich fünften Verwaltungsdatensatzes CE(5) an dritter Stelle, das heißt nach den Verwaltungsdatensätzen CE(3) und CE(1). Die neue Numerierung ist in Fig. 5e kursiv dargestellt.

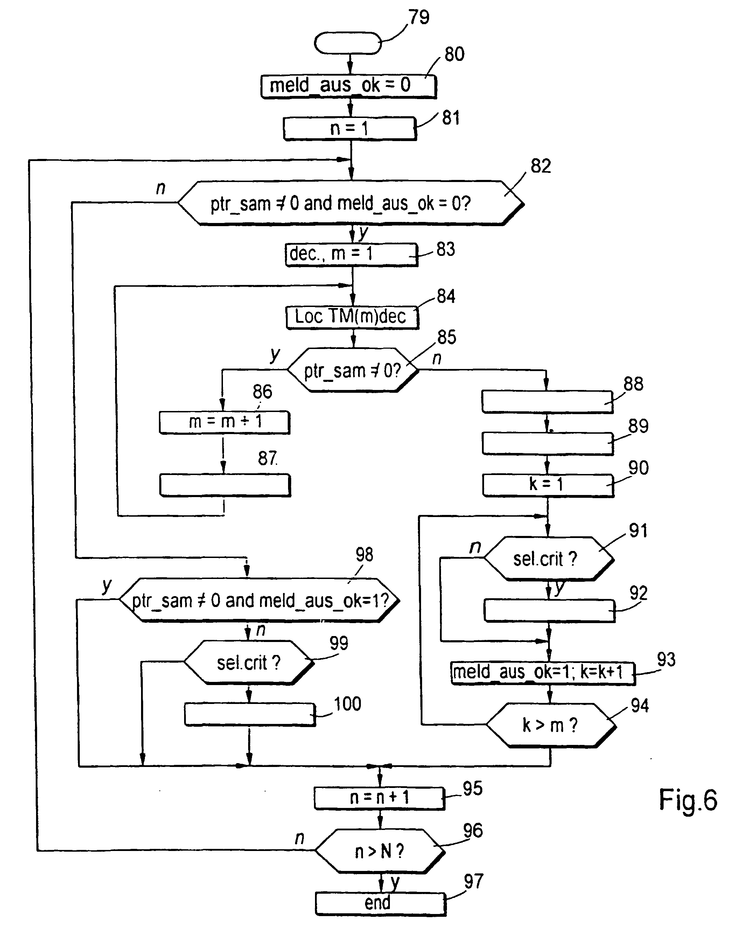

Fig. 6 zeigt ein Programm zur Ausgabe von Sammelmeldungen, das bei 79 beginnt, wobei angenommen wird, daß in den Verwaltungsdatensätzen diejenigen Verkehrsmeldungen, die Sammelmeldungscharakter haben, derart vorbereitet sind, daß der Zeiger ptr_sam direkt auf den folgenden Verwaltungsdatensatz mit Sammelmeldungscharakter zeigt.

Diese Vorbereitung geschieht beim ersten Empfang einer jeden Verkehrsmeldung, wobei zunächst geprüft wird, ob eine andere bereits gespeicherte Verkehrsmeldung eine gleiche oder ähnliche Ereignisangabe aufweist. Dann wird bei der bereits gespeicherten und bei der neuen Verkehrsmeldung die Kennung "sammel-meld" auf 1 gesetzt und bei der bereits gespeicherten Verkehrsmeldung der Zeiger ptr_sam auf den Verwaltungsdatensatz der neuen Verkehrsmeldung gesetzt. Bei der Entscheidung, ob beide Verkehrsmeldungen und gegebenenfalls noch weitere als Sammelmeldung ausgegeben werden, wird die Kennung "sammel-kat" berücksichtigt.

Im Programmteil 80 wird eine Kennung meld_aus_ok auf 0 gesetzt. Bei 81 wird ein Zähler n auf 1 gesetzt. Anschließend verzweigt sich das Programm bei 82 in Abhängigkeit davon, ob der Zeiger ptr_sam ungleich 0 und die Kennung meld_aus_ok gleich 0 ist. Zutreffendenfalls wird das Ereignis der Verkehrsmeldung mit der Nummer n bei 83 decodiert und in den Arbeitsspeicher des Mikrocomputers 11 (Fig. 1) geladen. Dieses Ereignis ist beispielsweise "Stau". Außerdem wird m auf 1 gesetzt.

Danach wird bei 84 der ortsspezifische Teil der m-ten in die Sammelmeldung aufzunehmenden Verkehrsmeldung decodiert und geladen, worauf sich das Programm bei 85 in Abhängigkeit davon verzweigt, ob noch weitere Verkehrsmeldungen, die zu einer Sammelmeldung zusammengefaßt werden können, vorhanden sind. Solange noch weitere solcher Verkehrsmeldungen vorhanden sind, wird m bei 86 inkrementiert. Danach wird bei 87 gemäß ptr_sam auf die nächste Verkehrsmeldung verzweigt, deren ortsspezifischer Teil bei 84 decodiert und geladen wird.

Ist jedoch bei 85 keine weitere für eine Ausgabe als Sammelmeldung vorgesehene Verkehrsmeldung mehr vorhanden, wird bei 88 der Satzbau aufgestellt. Im Anschluß daran erfolgt bei 89 die Ausgabe des ereignisspezifischen Teils der Sammelmeldung, beispielsweise "Stau auf folgenden Strecken". Bei 90 wird ein Hilfszähler k auf 1 gesetzt, mit dessen Hilfe die einzelnen ortsspezifischen Teile abgerufen und bei 92 ausgegeben werden, beispielsweise "Autobahn A2 zwischen Dortmund und Hannover". Die Ausgabe 92 wird jedoch für Verkehrsmeldungen bzw. deren ortsspezifischen Teil umgangen, die einem vorgegebenen Selektionskriterium sel.crit nicht genügen, was bei 91 geprüft wird. Ein solches Selektionskriterium ist beispielsweise "nur Verkehrsmeldungen, die eine bestimmte Straße in einer bestimmten Richtung betreffen". Im Anschluß an die Ausgabe 92 wird bei 93 der Zeiger meld_aus_ok auf 1 gesetzt und der Zähler k inkrementiert.

Bei 94 wird geprüft, ob k größer als m ist. Solange dieses nicht der Fall ist, werden die Programmteile 91, 92 und 93 wiederholt. Ist jedoch k größer als m, ist die Ausgabe dieser Sammelmeldung abgeschlossen. Wenn für m = 3 jede dieser Verkehrsmeldungen dem Selektionskriterium genügt, lautet beispielsweise eine ausgegebene Sammelmeldung "Staus auf folgenden Strecken: A5 zwischen Bad Nauheim und Butzbach, A5 zwischen Homberg(Ohm) und Alsfeld/West und A7 zwischen Melsungen und Guxhagen".

Nach einer Inkrementierung von n bei 95 wird bei 96 abgefragt, ob n größer als N ist. Ist dieses der Fall, wird bei 97 das Programm beendet. Anderenfalls wird das Programm bei 82 mit der Prüfung fortgesetzt, ob die nächste Verkehrsmeldung zur Ausgabe als Sammelmeldung gekennzeichnet ist. Ist diese nicht als Sammelmeldung gekennzeichnet, wird bei 98 geprüft, ob der Zeiger ptr_sam ungleich 0 und der Zeiger meld_aus_ok gleich 1 ist. Trifft dieses zu, handelt es sich um eine Meldung, die bereits innerhalb einer Sammelmeldung ausgegeben wurde, so daß keine weitere Ausgabe (als Einzelmeldung) mehr erforderlich ist und über die Inkrementierung 95 und die Verzweigung 96 das Programm bei 97 beendet oder mit einer nächsten Verkehrsmeldung bei 82 fortgesetzt wird. Trifft jedoch die bei 98 angegebene Bedingung nicht zu, erfolgt bei 99 eine Prüfung auf das Selektionskriterium sel.crit und gegebenenfalls bei 100 eine Ausgabe als Einzelmeldung.

## Patentansprüche

1. Verfahren zur Ausgabe von empfangenen digital codierten Verkehrsmeldungen, die Ortsangaben und Ereignisangaben enthalten, **dadurch gekennzeichnet, daß** empfangene Verkehrsmeldungen zwischengespeichert (13) werden und daß die Ausgabe (8) der zwischengespeicherten Verkehrsmeldungen (33,...,3N) in einer Reihenfolge nach vorgegebenen Kriterien unter Verwendung von mit den Verkehrsmeldungen zwischengespeicherten zusätzlichen Daten (21,...,2N) erfolgt.

2. Verfahren nach Anspruch 1, **dadurch gekennzeichnet, daß** ein Kriterium die Uhrzeit des Erstempfangs der Verkehrsmeldungen ist.

3. Verfahren nach einem der Ansprüche 1 oder 2, **dadurch gekennzeichnet, daß** ein Kriterium die Hierarchie derjenigen Straßen ist, auf die sich die Verkehrsmeldungen beziehen.

4. Verfahren nach einem der Ansprüche 1 bis 3, **dadurch gekennzeichnet, daß** ein Kriterium ein Grad der Dringlichkeit einer Verkehrsmeldung ist, der zusammen mit der Verkehrsmeldung empfangen wurde oder in einem Ereigniskatalog (17) dauerhaft abgespeichert ist.

5. Verfahren nach einem der vorhergehenden Ansprüche, **dadurch gekennzeichnet, daß** jeweils beim ersten Empfang einer Verkehrsmeldung eine neue Reihenfolge festgelegt und in Form von Zeigern mit den Verkehrsmeldungen abgelegt wird.

6. Verfahren nach einem der vorhergehenden Ansprüche, **dadurch gekennzeichnet, daß** von mehreren in der Einrichtung an sich vorgesehenen Kriterien ein Kriterium oder eine Verknüpfung mehrerer Kriterien auswählbar und speicherbar ist.

7. Verfahren zur Ausgabe von empfangenen digital codierten Verkehrsmeldungen, die Ortsangaben und Ereignisangaben enthalten, **dadurch gekennzeichnet, daß** die empfangenen Verkehrsmeldungen zwischengespeichert werden und daß bei Verkehrsmeldungen mit gleichen oder ähnlichen Ereignisangaben das Ereignis zusammen mit einer Aufzählung der Ortsangaben als Sammelmeldung ausgegeben wird.

8. Verfahren nach Anspruch 7, **dadurch gekennzeichnet, daß** beim Empfang einer Verkehrsmeldung geprüft wird, ob bereits mindestens eine Verkehrsmeldung mit einer gleichen Ereignisangabe zwischengespeichert ist, und daß zutreffendenfalls die betroffenen Verkehrsmeldungen mit einem Kennzeichen versehen werden, das die Zugehörigkeit zu einer dieses Ereignis betreffenden Sammelmeldung bedeutet.

9. Verfahren nach Anspruch 8, **dadurch gekennzeichnet, daß** das Kennzeichen in einer Verkehrsmeldungsverwaltungsdatei abgelegt wird.

10. Verfahren nach einem der Ansprüche 7 oder 8, **dadurch gekennzeichnet, daß** nur diejenigen Verkehrsmeldungen, die einem Selektionskriterium genügen, in einer Sammelmeldung ausgegeben werden.

11. Vorrichtung zur Durchführung des Verfahrens nach einem der vorhergehenden Ansprüche mit einem Speicher (13) für die empfangenen Verkehrsmeldungen, mit Mitteln (11) zur Festlegung einer Ausgabereihenfolge für die zwischengespeicherten Verkehrsmeldungen nach vorgegebenen Kriterien unter Verwendung von mit den Verkehrsmeldungen zwischengespeicherten zusätzlichen Daten, bzw. zur Zusammenfassung der zwischengespeicherten Verkehrsmeldungen mit gleichen oder ähnlichen Freignisangaben zu Sammelmeldungen, wobei das Ereignis zusammen mit einer Aufzählung der Ortsangaben ausgegeben wird und mit Mitteln (7, 8) zur Ausgabe der Verkehrsmeldungen.

## Claims

1. Method for outputting received digitally coded traffic announcements containing location statements and event statements, **characterized in that** received traffic announcements are buffer-stored (13), and **in that** the buffer-stored traffic announcements (33, ..., 3N) are output (8) in an order based on prescribed criteria using additional data (21, ..., 2N) buffer-stored with the traffic announcements.

2. Method according to Claim 1, **characterized in that** one criterion is the time at which the traffic announcements are first received.

3. Method according to either of Claims 1 and 2, **characterized in that** one criterion is the hierarchy of those roads to which the traffic announcements relate.

4. Method according to one of Claims 1 to 3, **characterized in that** one criterion is a degree of urgency for a traffic announcement, said degree having been received together with the traffic announcement or being permanently stored in an event catalogue (17).

5. Method according to one of the preceding claims, **characterized in that** whenever a traffic announcement is first received a new order is stipulated and stored in the form of pointers with the traffic announcements.

6. Method according to one of the preceding claims, **characterized in that** one criterion or a link comprising a plurality of criteria can be selected from a plurality of criteria provided in the device per se and can be stored.

7. Method for outputting received digitally coded traffic announcements containing location statements and event statements, **characterized in that** the received traffic announcements are buffer-stored, and **in that** in the event of traffic announcements having identical or similar event statements the event is output together with a listing of the location statements as a collective announcement.

8. Method according to Claim 7, **characterized in that** when a traffic announcement is received a check is performed to determine whether at least one traffic announcement having an identical event statement is already buffer-stored, and **in that** if this is so then the traffic announcements in question are provided with an identifier which signifies the association with a collective announcement relating to this event.

9. Method according to Claim 8, **characterized in that** the identifier is stored in a traffic-announcement management file.

10. Method according to either of Claims 7 and 8, **characterized in that** only those traffic announcements which meet a selection criterion are output in a collective announcement.

11. Apparatus for carrying out the method according to one of the preceding claims having a memory (13) for the received traffic announcements, having means (11) for stipulating an order of output for the buffer-stored traffic announcements based on prescribed criteria using additional data buffer-stored with the traffic announcements, or for combining the buffer-stored traffic announcements with identical or similar event statements to form collective announcements, the event being output together with a listing of the location statements, and having means (7, 8) for outputting the traffic announcements.

## Revendications

1. Procédé d'affichage d'informations routières numériques codées reçues, qui contiennent des indications de lieux et des indications d'événements,
**caractérisé en ce que**
les informations routières reçues sont intercalées en mémoire (13) et l'affichage (8) des informations routières intercalées en mémoire (33, ..., 3N) s'effectue dans une séquence répondant à des critères prédéterminés en utilisant des données complémentaires (21, ..., 2N) intercalées en mémoire avec les informations routières.

2. Procédé selon la revendication 1,
**caractérisé en ce qu'**
un critère représente l'heure de la première réception des informations routières.

3. Procédé selon l'une des revendications 1 ou 2,
**caractérisé en ce qu'**
un critère représente la hiérarchie des routes auxquelles se rapportent les informations routières.

4. Procédé selon l'une des revendications 1 à 3,
**caractérisé en ce qu'**
un critère représente un degré d'urgence d'une information routière qui a été reçue conjointement avec cette information routière ou est enregistré de façon permanente dans un catalogue d'événements (17).

5. Procédé selon l'une quelconque des revendications précédentes,
**caractérisé en ce que**
lors de la première réception d'une information routière, une nouvelle séquence est à chaque fois déterminée et distribuée avec les informations routières sous la forme d'indicateurs.

6. Procédé selon l'une quelconque des revendications précédentes,
**caractérisé en ce que**
à partir de plusieurs critères prévus en soi dans le dispositif, un critère ou une association de plusieurs critères peut être sélectionné(e) et mémorisé(e).

7. Procédé d'affichage d'informations routières numériques reçues, qui contiennent des indications de lieux et des indications d'événements,
**caractérisé en ce que**
les informations routières reçues sont mémorisées et, lorsque les informations routières ont des indications d'événements identiques ou semblables, l'événement est enregistré sous forme d'information collective conjointement avec une énumération des indications de lieux.

8. Procédé selon la revendication 7,
**caractérisé en ce que**
lors de la réception d'une information routière, on vérifie si au moins une information routière avec une indication d'événements identique est déjà intercalées en mémoire et, éventuellement, les informations routières concernées sont munies d'un drapeau signifiant leur appartenance à une information collective concernant cet événement.

9. Procédé selon la revendication 8,
**caractérisé en ce que**
le drapeau est distribué dans un fichier d'administration des informations routières.

10. Procédé selon l'une des revendications 7 ou 8,
**caractérisé en ce que**
seules les informations routières qui répondent à un critère de sélection sont affichées dans une information collective.

11. Dispositif permettant de mettre en oeuvre le procédé selon l'une quelconque des revendications précédentes, comprenant une mémoire (13) pour les informations routières reçues, des moyens (11) pour déterminer une séquence d'affichage pour les informations routières intercalées en mémoire selon des critères prédéterminés en utilisant des données complémentaires intercalées en mémoire avec ces informations routières, ou pour regrouper dans des informations collectives les informations routières intercalées en mémoire et ayant des indications d'événements identiques ou semblables, et des moyens (7, 8) pour afficher les informations routières.
